# EUROPÄISCHE PATENTSCHRIFT

(11) **EP 1 279 433 B1**
(45) Veröffentlichungstag und Bekanntmachung des Hinweises auf die Patenterteilung: **08.10.2008**
(21) Anmeldenummer: 02011325.4
(22) Anmeldetag: 23.05.2002
(51) Int. Cl.: B01J 2/00, B01J 2/16

(54) **Verfahren zum Coating von Babynahrung**
Process for coating of baby food
Procédé de revètement pour la nourriture de bébé

(30) Priorität: 26.06.2001 DE 10130334
(43) Veröffentlichungstag der Anmeldung: 29.01.2003
(60) Teilanmeldung: 08013803.5
(73) Patentinhaber: Glatt Ingenieurtechnik GmbH, D-99427 Weimar (DE)
(72) Erfinder: RÜMPLER, Karlheinz, Dr., 99425 Weimar (DE); WASKOW, Mike, 07747 Jena (DE); JACOB, Michael, 99427 Weimar (DE)
(74) Vertreter: Maucher, Wolfgang

(56) Entgegenhaltungen:
- EP-A- 0 332 929
- EP-A- 0 938 922
- WO-A-95/15291
- WO-A-98/53907
- DE-A- 2 417 572
- DE-A- 4 324 104
- DE-A- 4 338 400
- DE-A- 19 544 293
- GB-A- 1 033 484
- GB-A- 1 508 777
- US-A- 2 953 458
- US-A- 3 042 526
- US-A- 3 238 045
- US-A- 3 649 291
- US-A- 3 728 127
- US-A- 4 318 932
- US-A- 5 211 985
- US-A- 6 113 805
- US-B1- 6 239 095

## Beschreibung

Die Erfindung betrifft ein Verfahren zum Coating von Babynahrungspulver in Form von Materialteilchen, insbesondere von Massenprodukten, gemäß dem Hautanspruch.

Es ist bekannt, dass zur Beeinflussung der Eigenschaften von körnigen bis pulverförmigen Materialien diese mit einer Schutzschicht umgeben werden. Diese Schutzschichten haben die Aufgabe, die Lagerstabilität der behandelten Materialien zu erhöhen, eine chemische Veränderung der Stoffe zu verhindern oder Eigenschaften wie Geruch, Geschmack und Klebrigkeit zu maskieren und die Benetzbarkeit zu beeinflussen. Durch diese Schutzschicht ist es auch möglich, den Abrieb des Materials erheblich zu reduzieren. Beim Aufbringen der Schutzschicht muss beachtet werden, das eine gesteuerte Freisetzung der im umhüllten Material vorhandenen Komponenten bei entsprechendem Bedarf in einem bestimmten Zeitraum eingehalten wird. Durch den Einsatz von Enzymen, Katalysatoren, waschaktiven Substanzen, Metallen und Metallverbindungen wird eine funktionelle Oberfläche der Produktpartikel erzielt.

Aus der Pharmaindustrie ist ein Coating von körnigen bis pulverförmigen Materialien bekannt. Bedingung bei den in der Pharmaindustrie angewendeten Verfahren ist, dass jedes Materialteilchen gleichen Verweilzeiten und damit gleichen Bedingungen für den Coatingprozess ausgesetzt werden muss. Alle Materialteilchen werden mit gleichen Coatingteilen versehen, und es werden geschlossene Coatingschichten auf die Teilchen aufgetragen. Um den hohen Qualitätsmerkmalen gerecht zu werden, erfolgt das Coating von pharmazeutischen Produkten in Chargenbetrieb in einer Wirbelschicht oder in einer Drehtrommel. Dabei können der Wirbelschicht beziehungsweise der Drehtrommel nur geringe Mengen des zu behandelnden Materials aufgegeben werden, um die entprechenden Qualitätsmerkmale einhalten zu können.

Nachteilig an diesen Verfahren ist, dass sie wegen des Chargenbetriebs nur für kleine Produktmengen geeignet sind und Coatingqualitäten erreichen, die bei Massenprodukten nicht notwendig und kostenmäßig nicht vertretbar sind.

Aus der Patenschrift US 3,042,526 ist ein Verfahren zur Agglomeration eines fein verteilten Pulvers, wie Milchpulver, bekannt. Das dortige Verfahren basiert auf einer intensiven Mischung von einem zu agglomerierenden und einem agllomerierenden Material, die in annähernd senkrecht zueinander gerichteten Strahlen aufeinanderprallen. Eine Fluidisierung findet nicht statt und das Material wird aus der entsprechenden Apparatur unten entnommen.

Die Aufgabe der Erfindung besteht darin, ein Verfahren zum Coating von körnigem bis pulverförmigem Babynahrungspulver in Form von Materialteilchen zu entwickeln, das kostengünstig für Massenprodukte einsetzbar ist und bei dem das Coatingprodukt kontinuierlich und in einer für Massenprodukte erforderlichen Qualität und Durchsatzmenge herstellbar ist.

Die Aufgabe wird erfindungsgemäß mit den Merkmalen des Anspruches 1 gelöst. Vorteilhafte Ausgestaltungen des Verfahrens sind in den Unteransprüchen angegeben.

Das Coating von solchen körnigen bis pulverförmigen Massenprodukten erfolgt in einer kontinuierlich betriebenen Wirbelschicht, bei dem das Coatingmaterial (Lecithin) kontinuierlich in wenigstens zwei unterschiedlichen Bereichen auf die in der Wirbelschicht befindliche Materialschicht aufgetragen wird. Dabei wird das Coatingmaterial in Form von Lösungen, Suspensionen oder Schmelzen mit einem Trockenstoffanteil von vorzugsweise 2 bis 20% in Form einer Coatingmatrix, bei dem keine vollständige Umhüllung der Materialteilchen mit Coatingmaterial erfolgt, aufgetragen. Dadurch ist es möglich, kostengünstig Massenprodukte mit einer entsprechenden Umhüllung von Coatingmaterial zu versehen. Die mit einer Coatingmatrix versehenen Materialteilchen weisen eine funktionelle Oberfläche auf und erfüllen somit die Anforderungen entsprechend ihrer Aufgabenstellung wie Erhöhung der Lagerstabilität, Verhinderung von Veränderungen der chemischen Eigenschaften der umhüllten Materialien oder die Möglichkeit, die Benetzbarkeit der behandelten Materialien zu beeinflussen.

Die Erfindung wird anhand von Ausführungsbeispielen näher erläutert. In der dazugehörigen Zeichnung ist ein Querschnitt durch eine Wirbelschichtanlage zum Coating von körnigen bis pulverförmigen Materialien schematisch darstellt.

Das erfindungsgemäße Verfahren erfolgt in einem kontinuierlich arbeitenden Wirbelschichtapparat. Das Ausgangsmaterial mit Körnung kleiner 1 mm wird über den Feststoffeintrag 2 und eine Zellenradschleuse 12 einem ersten Bereich des Wirbelraums II der Wirbelschicht 9 zugeführt. Entsprechend den spezifischen Materialbedingungen des zu coatenden Massenproduktes Babynahrungspulver durchläuft das Material unterschiedliche Bereiche der Wirbelschicht 9. Unterschiedliche Prozesse wie Aufheizen, Agglomerieren, Coating, Trocknen und Kühlen werden in einer entsprechenden Kombination, die durch die Materialeigenschaft bestimmt wird, durchgeführt. Dem Bereich der Wirbelschicht 9 wird Pressluft 1 mit unterschiedlichen Temperaturen über die jeweiligen Zuluftkammern 10 und einem Luftverteilungsboden 11 zugeführt. Dabei bilden die Zuluftkammern 10 und der Luftverteilungsboden 11, als obere Begrenzung, den Anströmteil I, in dem die Prozessluft 1 in den Wirbelraum II eingebracht, verteilt und vergleichmäßigt wird. Das Coatingmaterial wird kontinuierlich in wenigstens zwei unterschiedlichen Bereichen durch ein Sprühsystem 8 im statistischen Mittel auf das in der Wirbelschicht 9 befindliche zu coatende Material aufgetragen. Das Coatingmaterial wird in Form von Lösungen, Suspensionen oder Schmelzen mit einem Trockenstoffanteil von 0,5 bis 100%, vorzugsweise 2 bis 20% auf die Materialteilchen durch das Sprühsystem 8 aufgetragen. Die Eindüsung des Coatingmaterials durch das Sprühsystem 8 kann von oben auf die Materialschicht oder von unten in die Materialschicht oder durch geneigt angeordnete Ein- oder Mehrstoffdüsen erfolgen. Die Temperatur der der Wirbelschicht 9 zugeführten Zuluft (Prozessluft 1) ist materialabhängig und liegt für die einzelnen Coatingstufen im in Anspruch 1 oder 2 genannten Bereich. Durch die über die Prozessluft 1 eingebrachte Energie erfolgt eine Trocknung und Verfestigung der sich im Bedüsungsbereich auf den Materialteilchen bildenden Coatingschichten. Dabei bildet das Coatingmaterial an den Materialteilchen eine Coatingmatrix, bei dem keine vollständige Umhüllung der Materialteilchen mit Coatingmaterial erfolgt.

Oberhalb des Wirbelraums II schließt sich die Expansionszone III an, in der die Strömungsgeschwindigkeit der Prozessluft 1 durch Querschnittserweiterungen verringert wird. Die Seitenwände der Expansionszone III weisen eine starke Neigung von 15-45° zur Senkrechten auf, so dass eine Querschnittserweiterung bis zum anschließenden Filtersystem IV erfolgt. Durch die Verringerung der Strömungsgeschwindigkeit der Prozessluft 1 erfolgt eine Vorabscheidung von aus dem Wirbelraum II mitgerissenen Materialteilchen, die wieder in den Wirbelraum rückgeführt werden.

An die Expansionszone III schließt sich ein integriertes Filtersystem IV, zur Entstaubung der Prozessluft 1 und zur gleichzeitigen Rückführung des Staubes in die darunterliegende Wirbelschicht 9, an. Das Filtersystem IV besteht aus Filterelementen 7, die mechanisch durch die Filterabreinigung 6 und/oder durch Druckluft 5 impulsmäßig gereinigt werden können. Der Einsatz anderer bekannter Filterelemente ist möglich. Durch das integrierte Filtersystem IV wird ein Kontakt mit den Stäuben vermieden und die Staubexplosionsgefährdung auf den Innenraum des Wirbelschichtapparates reduziert.

Die gereinigte Prozessluft verlässt das System als Abluft 4, während das Fertigprodukt ebenfalls über eine Zellenradschleuse 12 als Druckabschluss und über den Produktaustrag 3 aus dem System ausgetragen wird.

Der Anlage können weitere Ausrüstungsteile, beispielsweise zur Explosionsunterdrückung/-entlastung oder zur Unterstützung der Feststoffbewegung z.B. durch Vibrationseinrichtungen, hinzugefügt werden.

Nachfolgend wird das erfindungsgemäße Verfahren an einem konkreten Beispiel erläutert.

### Beispiel 1:

Babynahrungspulver wird zur Beeinflussung der Benetzbarkeit mit Lecithin gecoatet. Dabei wird die Redispergierbarkeit von einem Instantprodukt wesentlich verbessert. Das pulverförmige Material wird in einer Wirbelschicht mit vier Kammern im Anströmbereich und eine Wirbelbodenfläche von 0,2 m² zunächst agglomeriert und danach gecoatet. Die Agglomeration erfolgt mit Wasser, das Coating mit 15% Lecithin (Trockenstoff).
Der Massendurchsatz an Fertigprodukt betrug 15 kg/h.

| 1. Kammer | Agglomeration mit Wasser |
|---|---|
| | Zulufttemperatur 60°C |
| | Schichttemperatur 35°C |

| 2. Kammer | Agglomeration mit Wasser |
|---|---|
| | Zulufttemperatur 60°C |
| | Schichttemperatur 35°C |

| 3. Kammer | Coating 1 |
|---|---|
| | Zulufttemperatur 75°C |
| | Schichttemperatur 42°C |
| | Sprühmedium 50%-ige Lecithinlösung |

| 4. Kammer | Coating 2 |
|---|---|
| | Zulufttemperatur 75°C |
| | Schichttemperatur 42°C |
| | Sprühmedium 50%-ige Lecithinlösung |

| Aufteilung der Wirbelfläche: | |
|---|---|
| | 25% Agglomeration |
| | 25% Agglomeration |
| | 25% Coating 1 |
| | 25% Coating 2 |

Zusammenfassend ist also folgendes festzustellen:
Die Erfindung betrifft ein Verfahren zum Coating von Babynahrungspulver.

Die Aufgabe der Erfindung besteht darin, ein Verfahren zum Coating von körnigem bis Babynahrungspulver zu entwickeln, das kostengünstig für Massenprodukte einsetzbar ist und bei dem das Coatingprodukt kontinuierlich und in einer für Massenprodukte erforderlichen Qualität und Durchsatzmenge herstellbar ist.

Erfindungsgemäß wird das durch die in Anspruch 1 gezeigten Merkmale erreicht.

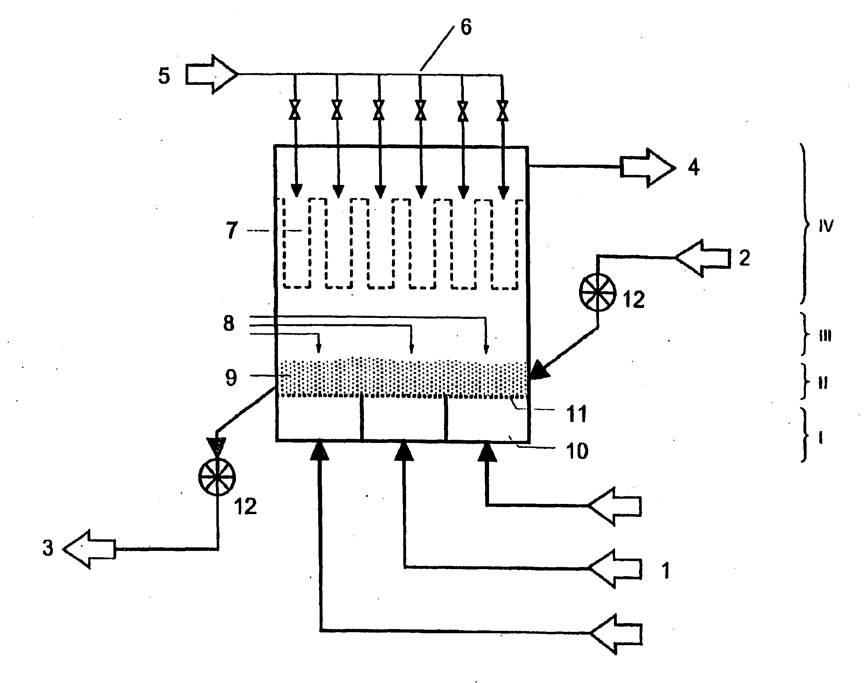

## Patentansprüche

1. Verfahren zum Coating von Babynahrungspulver in Form von Materialteilchen, bei denen als Coatingmaterial Lecithin auf die Materialteilchen aufgetragen wird, wobei
- das Coatingmaterial auf die pulverförmigen Materialteilchen in Form einer Coatingmatrix, wobei keine vollständige Umhüllung der Materialteilchen mit Coatingmaterial erfolgt, aufgetragen und durch Prozessluft getrocknet und verfestigt wird,
- das Coatingmaterial kontinuierlich in wenigstens zwei unterschiedlichen Bereichen auf die Materialschicht einer kontinuierlich betriebenen Wirbelschicht aufgetragen wird, und
- das Endprodukt kontinuierlich aus der Wirbelschicht ausgetragen wird, und wobei
- zum Coating des Babynahrungspulvers in einem ersten und zweiten Bereich der Wirbelschicht das Babynahrungspulver mit Wasser agglomeriert wird,
- die Materialschichttemperatur im Bereich der Agglomeration 30-40°C beträgt,
- die Temperatur der zugeführten Zuluft im Bereich der Agglomeration des Materials 50-70°C beträgt,
- dem Material in einem dritten und vierten Bereich eine 45-55%-ige Lecithinlösung mit einer Coatingmaterialmenge von 10-20% Lecithin bezogen auf den Trockenstoff zugeführt wird,
- die Materialschichttemperatur im Bereich der Coatingmaterialzuführung 38-45°C beträgt, und
- die Temperatur der zugeführten Zuluft im Bereich der Coatingmaterialzuführung 60-90°C beträgt.

2. Verfahren nach Anspruch 1,
wobei die Temperatur im Bereich der Agglomeration 35 °C beträgt;
- die Temperatur der zugeführten Zuluft im Bereich der Agglomeration des Materials 60°C beträgt,
- die Materialschichttemperatur im Bereich der Coatingmaterialzuführung 42°C beträgt, und
- die Temperatur der zugeführten Zuluft im Bereich der Coatingmaterialzuführung 75°C beträgt.

3. Verfahren nach Anspruch 1 oder 2, **dadurch gekennzeichnet, dass** die einzelnen Bereiche der Wirbelschicht, in der entsprechend der Prozessbedingungen ein Agglomerieren oder Coaten erfolgt, annähernd gleich groß ausgebildet sind.

## Claims

1. Method of coating powdered baby food in the form of particles of material, in which lecithin is applied as a coating material to the particles of material, wherein
- the coating material is applied to the powdered particles of material in the form of a coating matrix, whereby the particles of material are not totally encased in coating material, and the particles are dried and solidified by process air,
- the coating material is applied continuously in at least two different areas to the material layer of a continuously operating fluidised bed, and
- the end product is continuously expelled from the fluidised bed, and wherein
- for the purpose of coating the powdered baby food, in a first and second region of the fluidised bed the powdered baby food is agglomerated with water,
- the temperature of the material layer in the region of the agglomeration is 3 0-40°C,
- the temperature of the air supply provided in the region of the agglomeration of the material is 50-70°C,
- in a third and fourth region a 45-55% lecithin solution having an amount of coating material of 10-20% lecithin based on the dry matter is supplied to the material,
- the temperature of the material layer in the region of the supply of coating material is 38-45°C, and
- the temperature of the air supply provided in the region of the supply of coating material is 60-90°C.

2. Method according to claim 1,
wherein the temperature in the region of the agglomeration is 35°C;
- the temperature of the air supply provided in the region of the agglomeration of material is 60°C,
- the temperature of the material layer in the region of the supply of coating material is 42°C, and
- the temperature of the air supply provided in the region of the supply of coating material is 75°C.

3. Method according to claim 1 or 2, **characterised in that** the individual regions of the fluidised bed in which agglomeration or coating is carried out according to the process conditions are of approximately the same size.

## Revendications

1. Procédé d'enrobage de nourriture en poudre pour bébés sous la forme de particules de matière, pour lesquelles on applique comme matière d'enrobage de la lécithine sur les particules de matière, procédé selon lequel
- la matière d'enrobage est appliquée sur les particules de matière pulvérulente sous la forme d'une matrice d'enrobage, sachant qu'il ne se produit pas un enrobage intégral des particules de matière par la matière d'enrobage, et la matière d'enrobage est séchée et solidifiée par de l'air de traitement,
- la matière d'enrobage est appliquée en continu dans au moins deux zones différentes sur la couche de matière d'un lit fluidisé fonctionnant en continu, et
- le produit final est expulsé en continu du lit fluidisé, et sachant que
- pour l'enrobage de la nourriture en poudre pour bébés, la nourriture en poudre pour bébés est agglomérée avec de l'eau dans une première et une deuxième zones du lit fluidisé,
- la température de la couche de matière dans la zone d'agglomération est de 30 à 40 °C,
- la température de l'air d'alimentation apporté dans la zone d'agglomération de la matière est de 50 à 70 °C,
- on apporte à la matière, dans une troisième et une quatrième zones, une solution à 45-55% de lécithine avec une quantité de matière d'enrobage de 10 à 20% de lécithine sur la base de la matière sèche,
- la température de la couche de matière dans la zone de l'apport de matière d'enrobage est de 38 à 45 °C, et
- la température de l'air d'alimentation apporté dans la zone de l'apport de matière d'enrobage est de 60 à 90 °C.

2. Procédé selon la revendication 1, sachant que
- la température dans la zone d'agglomération est de 35 °C ;
- la température de l'air d'alimentation apporté dans la zone d'agglomération de la matière est de 60 °C,
- la température de la couche de matière dans la zone de l'apport de matière d'enrobage est de 42 °C, et
- la température de l'air d'alimentation apporté dans la zone de l'apport de matière d'enrobage est de 75 °C.

3. Dispositif selon la revendication 1 ou 2, **caractérisé en ce que** les différentes zones du lit fluidisé, dans lesquelles s'effectue une agglomération ou un enrobage conformément aux conditions de traitement, sont réalisées de tailles approximativement identiques.
